# EUROPÄISCHE PATENTSCHRIFT

(11) **EP 2 195 214 B1**
(45) Veröffentlichungstag und Bekanntmachung des Hinweises auf die Patenterteilung: **21.08.2013**
(21) Anmeldenummer: 08803147.1
(22) Anmeldetag: 21.08.2008
(51) Int. Cl.: B60S 1/08, B60R 7/04

(54) **SENSORANORDNUNG**
SENSOR ARRANGEMENT
DISPOSITIF DE DÉTECTION

(30) Priorität: 28.08.2007 DE 102007040562
(43) Veröffentlichungstag der Anmeldung: 16.06.2010
(73) Patentinhaber: Continental Automotive GmbH, 30165 Hannover (DE)
(72) Erfinder: BECK, Andreas, 65620 Waldbrunn (DE); THIEL, Kerstin, 60385 Frankfurt (DE); WILLNAUER, Bernhard, 35418 Buseck-beuern (DE)
(86) Internationale Anmeldenummer: PCT/EP2008/060981
(87) Internationale Veröffentlichungsnummer: WO 2009/027321

(56) Entgegenhaltungen:
- DE-A1- 19 647 203
- DE-C1- 19 753 879
- JP-A- 61 044 058

## Beschreibung

Die Erfindung bezieht sich auf eine Sensoranordnung mit wenigstens einem Sensor, der fahrgastraumseitig an einer Windschutzscheibe eines Kraftfahrzeugs in Anlage und an einem Träger angeordnet ist, welcher an einem Karosserieteil des Kraftfahrzeugs, insbesondere im Dachbereich, befestigt ist und zumindest um eine Schwenkachse schwenkbar an dem Träger gelagert ist, die sich wenigstens annähernd parallel zur Ebene der Windschutzscheibe erstreckt, wobei der Sensor federnd zur Anlage an der Windschutzscheibe beaufschlagt ist und an dem Träger der erste Endbereich eines sich in Längsrichtung des Kraftfahrzeugs erstreckenden Hebels an einem ersten Gelenk um zumindest eine erste Schwenkachse schwenkbar angelenkt ist, an dessen zweitem Endbereich der Sensor an einem zweiten Gelenk um zumindest eine zweite Schwenkachse schwenkbar angelenkt ist, wobei die erste Schwenkachse und die zweite Schwenkachse sich zumindest annähernd parallel zur Ebene der Windschutzscheibe im Anlagebereich des Sensors erstrecken und wobei der Hebel auf die Windschutzscheibe zu federbeaufschlagt ist.

Bei derartigen Sensoranordnungen ist es erforderlich, dass der Sensor spielfrei an der Windschutzscheibe in Anlage ist. Dazu ist es bekannt den Sensor oder einen Halter für einen Sensor auf die Windschutzscheibe aufzukleben.

Dies erfordert einen aufwendigen Montagevorgang mit mehreren Teilen in einer ungünstigen Montageposition.

Bei einem Austausch der Windschutzscheibe muss auch der mit der Windschutzscheibe fest verklebte Sensor mit ausgetauscht werden.

Weiterhin ist es bekannt den Sensor mittels eines Trägers wie z. B. eines Dachmoduls zu befestigen. Aufgrund der Herstellungstoleranzen der verschiedenen Haltebauteile sowie der Windschutzscheibe kann eine spielfreie Anlage an der Windschutzscheibe nicht sichergestellt werden.

Aus der DE-A-19753879 ist eine Sensoranordnung der eingangs genannten Art bekannt, bei der eine Ω-artige Druckfeder mit ihrem einen Federarm an einem Träger und mit ihrem anderen Federarm an einem Arm des den Sensor tragenden Hebels mit Vorspannung in Anlage ist.

Aus der JP-A-61044058 ist eine Sensoranordnung bekannt, bei der der Sensor um eine Schwenkachse schwenkbar an einem Träger gelagert ist, welcher an einem Karosserieteil eines Fahrzeugs befestigt ist. Ein Ende einer spulenförmigen Feder ist an dem Träger abgestützt, während das andere Ende der Feder den Sensor gegen eine Windschutzscheibe beaufschlagt.

Aus der DE-A-199647203 ist eine Sensoranordnung bekannt, bei der der Sensor um eine Schwenkachse schwenkbar an einem Träger gelagert ist, welcher an einem Karosserieteil eines Fahrzeugs befestigt ist. Der Sensor ist nach einem Schwenken bis zur Anlage an einer Windschutzscheibe mittels eines Klebestreifens mit der Windschutzscheibe verbunden.

Aufgabe der Erfindung ist es daher eine Sensoranordnung der eingangs genannten Art zu schaffen, die die o. g. Nachteile vermeidet und auf einfache Weise eine zumindest weitgehend spielfreie Anlage des Sensors an der Windschutzscheibe ermöglicht.

Diese Aufgabe wird erfindungsgemäß dadurch gelöst, dass das eine Ende einer vorgespannten Zugfeder am Träger und das zweite Ende der Zugfeder am zweiten Endbereich des Hebels angeordnet ist.

Durch diese Ausbildung mit einfachem Aufbau wird der Sensor gegen die Windschutzscheibe gedrückt und kann sich durch seine Schwenkbarkeit dort an seinen Anlagebereich an der Windschutzscheibe so anpassen, dass er weitgehend spielfrei zur Anlage kommt.

Bei einem Defekt der Windschutzscheibe, die deren Austausch erfordert, kann der Sensor beibehalten werden und sich nach Einbau der neuen Windschutzscheibe wieder an diese weitgehend spielfrei anlegen.

Auch ist es möglich dieselbe Sensoranordnung bei verschiedenen Fahrzeugtypen, deren Scheibenkrümmungsradius unterschiedlich ist, anzuwenden, da der Sensor in seiner Anlage sich immer der jeweils vorliegenden Windschutzscheibe anpasst.

Eine Anpassbarkeit an die Windschutzscheibe mit zusätzlichen Freiheitsgraden wird dabei erreicht, wenn der Sensor mittels eines Pendellagers schwenkbar am Träger gelagert ist.

Dabei kann das erste Gelenk und/oder das zweite Gelenk ein Pendelgelenk oder ein Kugelgelenk sein.

Es ist aber auch möglich, dass das erste Gelenk eine sich entsprechend der ersten Schwenkachse erstreckende erste Gelenkachse und/oder das zweite Gelenk eine sich entsprechend der zweiten Schwenkachse erstreckende zweite Gelenkachse aufweist.

Vorzugsweise ist der Sensor ein Regen- und/oder Licht- und/oder Beschlag- und/oder Solarsensor, die als kapazitive oder optische Sensoren ausgebildet sein können.

Sowohl zur leichten Montage als auch zu einer einfachen Auswechselbarkeit können der oder die Sensoren in einer Aufnahme eingesetzt sein, die mittels des zweiten Gelenks um die zweite Schwenkachse schwenkbar an dem Hebel angelenkt ist.

Damit der Sensor bei der Montage bereits eine Grobausrichtung zur Windschutzscheibe erhält, kann die Schwenkbarkeit des Sensors um die zweite Schwenkachse durch einen oder mehrere Anschläge begrenzt sein.

Ist der Sensor in einer entgegen der Federbeaufschlagung von einer Anlageposition an der Windschutzscheibe wegbewegten, insbesondere weggeschwenkten Arretierposition arretierbar, so kann bereits vor Einbau der Windschutzscheibe in das Kraftfahrzeug die Sensoranordnung eingebaut werden.

Erfolgt dann das Einkleben der Windschutzscheibe, wird diese zunächst nicht durch den Sensor beaufschlagt.

Erst, wenn der Kleber zur Befestigung der Windschutzscheibe ausgehärtet ist, wird die Arretierung des Sensors gelöst, so dass sich der Sensor an die Windschutzscheibe anlegen kann.

Eine Beeinträchtigung des korrekten Befestigens der Windschutzscheibe wird somit auf einfache Weise vermieden.

Dazu kann in einfacher Weise ein an den Träger oder einem trägerfesten Bauteil verschiebbar angeordneter Arretierschieber in den Schwenkweg des Sensors und/oder des Hebels bewegbar sein, durch den der Sensor in der Arretierposition arretierbar ist.

Zu einer Einsparung von Montageaufwand kann der Träger an einem Dachmodul angeordnet oder Teil eines Dachmoduls sein, das an einem Dachquerträger zwischen den A-Säulen oder an einem Dachhimmel des Kraftfahrzeugs befestigt ist, wobei das Dachmodul eine Bedieneinheit und/oder einen Rückspiegel sowie Schnittstellen zur elektrischen Verbindung mit einem Bordnetz des Kraftfahrzeugs aufweist.

Damit werden mit Einbau des Dachmoduls eine Vielzahl von Komponenten, u. a. auch die Sensoranordnung gleichzeitig montiert.

Dabei kann das Dachmodul ein kamerabasiertes Fahrerassistenzsystem und/oder ein optisches Fahrzeuginsassen Klassifikationssystem und/oder ein Display und/oder eine Antenne aufweisen.

Ein Ausführungsbeispiel der Erfindung ist in der Zeichnung dargestellt und wird im Folgenden näher beschrieben. Es zeigen:

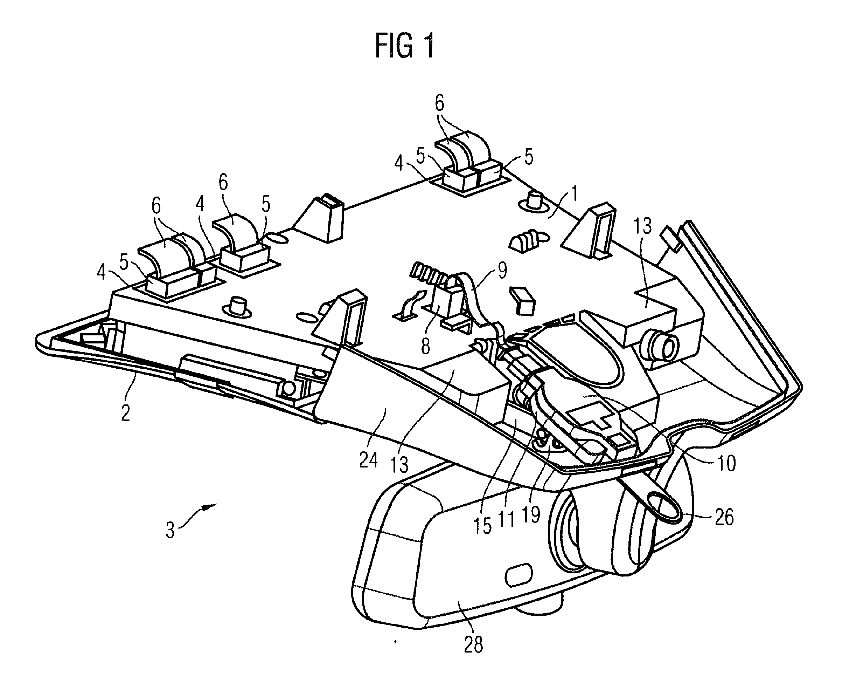

- Figur 1: eine perspektivische Draufsicht eines Dachmoduls,

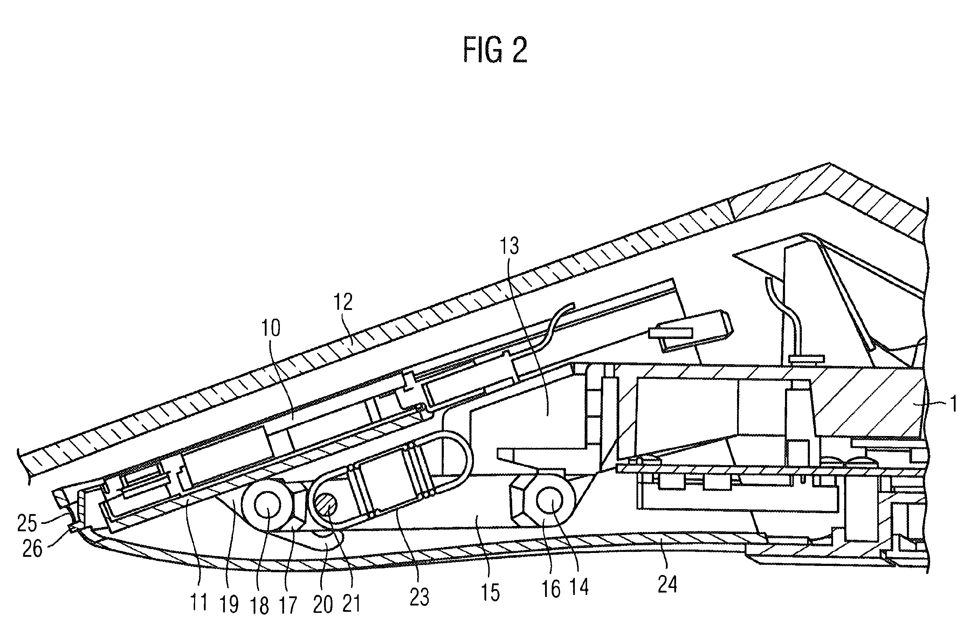

- Figur 2: einen Querschnitt des vorderen Bereichs einer Dachmodulanordnung mit einem Dachmodul nach Figur 1,

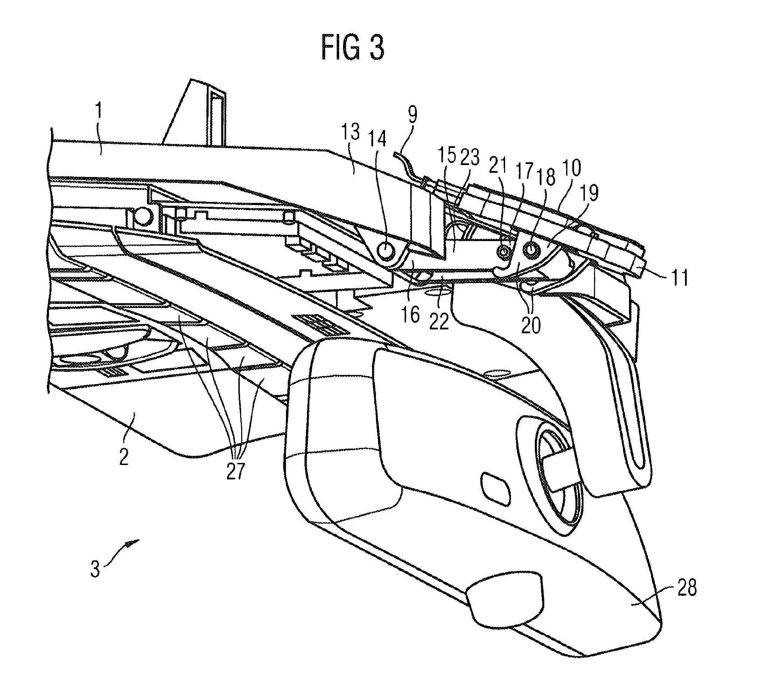

- Figur 3: eine perspektivische Untenansicht der Dachmodulanordnung nach Figur 2 ohne Abdeckungsteil,

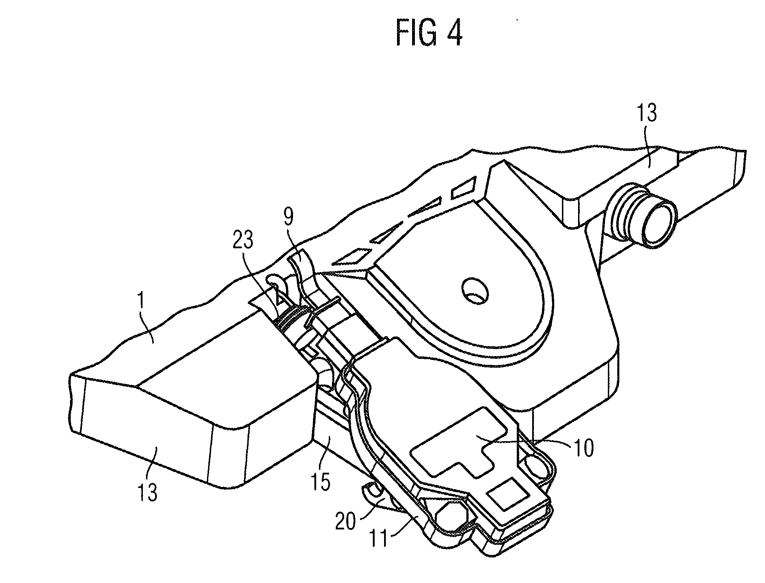

- Figur 4: eine perspektivische Draufsicht der Sensoranordnung der Dachmodulanordnung nach Figur 2,

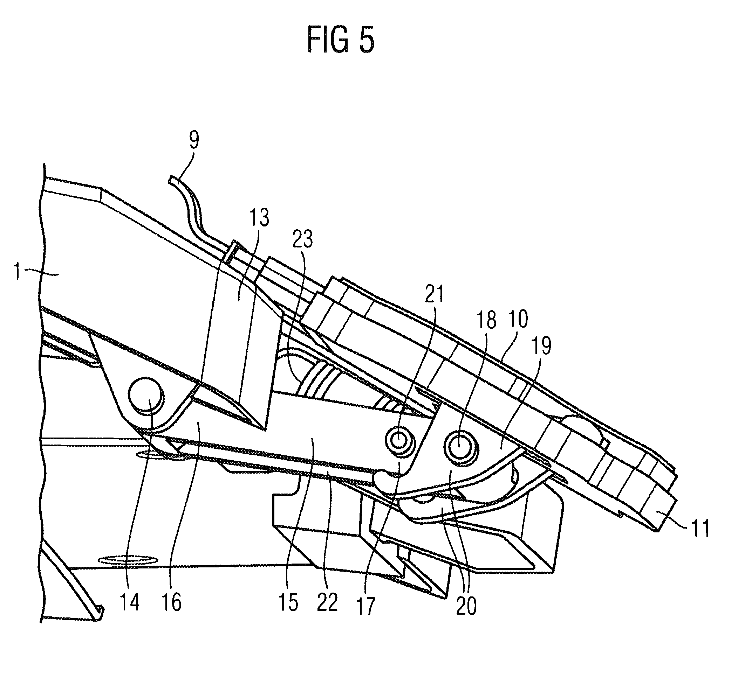

- Figur 5: eine perspektivische Untenansicht der Sensoranordnung der Dachmodulanordnung nach Figur 2.

Das dargestellte Dachmodul 3 ist an einem nicht dargestellten Dachquerträger zwischen den A-Säulen im Fahrgastraum eines Kraftfahrzeugs nahe dem oberen Bereich einer Windschutzscheibe 12 befestigbar.

Das Dachmodul 3 besteht aus einem Modulträger 1, der auf seiner dem Fahrgastraum zugewandten Seite von einer Modulverkleidung 2 abgedeckt ist.

Zur elektrischen Verbindung des Dachmoduls 3 mit dem Bordnetz des Kraftfahrzeugs sind an der Oberseite des Modulträgers 1 Steckanschlüsse 4 angeordnet, auf die Stecker 5 an den freien Enden von Kabeln 6 eines Kabelbaumes des Kraftfahrzeugs aufgesteckt sind.

Auf einem weiteren Steckanschluss 7 ist ein weiterer Stecker 8 aufgesteckt, dessen Kabel 9 zu einem Sensorcluster 10 führt, der einen Regen-, Licht-, Beschlag- und Solarsensor aufweist.

Das zur Windschutzscheibe 12 gerichtete Ende des Modulträgers 1 ist gabelartig mit zwei zur Windschutzscheibe 12 gerichteten, zueinander parallelen Gabelarmen 13 ausgebildet. Parallel zur Ebene der Windschutzscheibe 12 ist an den Gabelarmen 13 eine erste Gelenkachse 14 angeordnet, auf der ein Hebel 15 mit seinem ersten Endbereich 16 schwenkbar gelagert ist.

An seinem zweiten, der Windschutzscheibe 12 näheren Endbereich 17 ist parallel zur ersten Gelenkachse 14 eine zweite Gelenkachse 18 angeordnet, deren freien Enden seitlich von dem Hebel 15 hervorstehen.

Der zweite Endbereich 17 des Hebels 15 ist von einem Gabelteil 19 umgriffen, das in seinen Gabelarmen 20 Lagerbohrungen aufweist, mit denen es auf den freien Enden der zweiten Schwenkachse 18 schwenkbar gelagert ist.

Das Gabelteil 19 ist mit einer schalenartigen Aufnahme 11 fest verbunden, in die der Sensorcluster 10 eingesetzt ist.

Parallel in einem Abstand neben der zweiten Gelenkachse 18 ist ein Anschlagbolzen 21 den Hebel 15 durchragend fest an diesem angeordnet, dessen seitlich vom Hebel 15 hervorstehende Enden Anschläge bilden, an denen die Gelenkarme 20 anschlagen können.

Damit ist die Aufnahme 11 und mit ihr der Sensorcluster 10 zwischen einer Endlage, in der die Aufnahme 11 mit ihrem Boden etwa parallel zur Längserstreckung des Hebels 15 ausgerichtet ist, und einer zweiten Endlage, in der die Gabelarme 20 an dem Anschlagbolzen 21 anschlagen, um die zweite Schwenkachse 18 schwenkbar.

In der zweiten Endlage ist die Aufnahme 11 und mit ihr der Sensorcluster 10 gegenüber der Längserstreckung des Hebels 15 geneigt.

Der Anschlagbolzen 21 durchragt eine mittig im Hebel 15 ausgebildete Ausnehmung 22 und ist somit im Bereich der Ausnehmung 22 freiliegend.

Das eine hakenartige Ende einer Schraubenzugfeder 23 umgreift in der Ausnehmung 22 den Anschlagbolzen 21.

Das andere hakenartige Ende der Schraubenzugfeder 23 ist an einem Bereich des Modulträgers 1 befestigt, der bei jeder möglichen Schwenkstellung des Hebels 15 immer oberhalb einer Ebene liegt, die durch die erste und zweite Gelenkachse 14 und 18 geht.

Damit ist der Hebel 15 durch die vorgespannte Schraubenzugfeder 21 immer nach oben schwenkend federbeaufschlagt.

Da die Windschutzscheibe 12 nur um einen geringen Winkel gegenüber der Horizontalen geneigt sich über den Hebel 15 und dem Sensorcluster 10 befindet, ist der Sensorcluster 10 federnd in Richtung auf die Windschutzscheibe 12 vorgespannt.

Der Bereich der aus den Gabelarmen 13 des Modulträgers 1, dem Hebel 15 und der Aufnahme 11 mit Sensorcluster 10 bestehenden Sensoranordnung ist fahrgastraumseitig von einem schalenartigen Abdeckungsteil 24 als Verkleidung abgedeckt, das an dem Dachmodul 3 befestigt ist.

An seinem dem Dachmodul 3 abgewandten Ende besitzt das Abdeckteil 24 eine schlitzartige Öffnung 25, durch die ein Arretierschieber 26 einführbar ist, der in der Öffnung 25 abgestützt und mit seinem einen Endbereich an dem Sensorcluster 10 derart in Anlage ist, dass das Sensorcluster 10 in seiner am weitesten von der Windschutzscheibe 12 weggeschwenkten Position arretiert ist.

In dieser Position ist das Dachmodul 3 mit der Sensoranordnung schon fertig im Kraftfahrzeug montierbar, bevor die Windschutzscheibe 12 eingebaut ist.

Erst nach Einbau der Windschutzscheibe 12 und Aushärtung des Klebers zur Befestigung der Windschutzscheibe 12 wird der Arretierschieber 26 herausgezogen, so dass keine Arretierung des Sensorclusters 10 mehr vorliegt.

Nun kann durch die Kraftbeaufschlagung der Schraubenzugfeder 23 der Hebel 15 und mit ihm der Sensorcluster 10 zur Windschutzscheibe 12 hin schwenken, wobei der Sensorcluster 10 durch die Schwenkbarkeit um die zweite Gelenkachse 18 sich spielfrei an die Windschutzscheibe 12 anschmiegen kann.

Das Dachmodul 3 weist an seiner Fahrgastraumseite eine Bedieneinheit mit einer Mehrzahl an Bedientasten 27 auf.

Weiterhin ist an dem Dachmodul 3 ein Rückspiegel 28 angeordnet.

## Patentansprüche

1. Sensoranordnung mit wenigstens einem Sensor, der fahrgastraumseitig an einer Windschutzscheibe (12) eines Kraftfahrzeugs in Anlage und an einem Träger angeordnet ist, welcher an einem Karosserieteil des Kraftfahrzeugs, insbesondere im Dachbereich, befestigt ist und zumindest um eine Schwenkachse schwenkbar an dem Träger gelagert ist, die sich wenigstens annähernd parallel zur Ebene der Windschutzscheibe erstreckt, wobei der Sensor federnd zur Anlage an der Windschutzscheibe (12) beaufschlagt ist und an dem Träger der erste Endbereich eines sich in Längsrichtung des Kraftfahrzeugs erstreckenden Hebels (15) an einem ersten Gelenk um zumindest eine erste Schwenkachse schwenkbar angelenkt ist, an dessen zweitem Endbereich der Sensor an einem zweiten Gelenk um zumindest eine zweite Schwenkachse schwenkbar angelenkt ist, wobei die erste Schwenkachse und die zweite Schwenkachse sich zumindest annähernd parallel zur Ebene der Windschutzscheibe (12) im Anlagebereich des Sensors erstrecken und wobei der Hebel (15) auf die Windschutzscheibe zu federbeaufschlagt ist, **dadurch gekennzeichnet, dass** das eine Ende einer vorgespannten Zugfeder (23) am Träger und das zweite Ende der Zugfeder (23) am zweiten Endbereich des Hebels (15) angeordnet ist.

2. Sensoranordnung nach Anspruch 1, **dadurch gekennzeichnet, dass** das erste Gelenk und/oder das zweite Gelenk ein Pendelgelenk oder ein Kugelgelenk ist.

3. Sensoranordnung nach einem der Ansprüche 1 und 2, **dadurch gekennzeichnet, dass** das erste Gelenk eine sich entsprechend der ersten Schwenkachse erstreckende erste Gelenkachse (14) und/oder das zweite Gelenk eine sich entsprechend der zweiten Schwenkachse erstreckende zweite Gelenkachse (18) aufweist.

4. Sensoranordnung nach einem der vorhergehenden Ansprüche, **dadurch gekennzeichnet, dass** der Sensor ein Regen- und/oder Licht- und/oder Beschlag- und/oder Solarsensor ist.

5. Sensoranordnung nach einem der Ansprüche 1 bis 4, **dadurch gekennzeichnet, dass** der oder die Sensoren in einer Aufnahme (11) eingesetzt sind, die mittels des zweiten Gelenks um die zweite Schwenkachse schwenkbar an dem Hebel (15) angelenkt ist.

6. Sensoranordnung nach einem der Ansprüche 1 bis 5, **dadurch gekennzeichnet , dass** die Schwenkbarkeit des Sensors um die zweite Schwenkachse durch einen oder mehrere Anschläge begrenzt ist.

7. Sensoranordnung nach einem der vorhergehenden Ansprüche, **dadurch gekennzeichnet , dass** der Sensor in einer entgegen der Federbeaufschlagung von einer Anlageposition an der Windschutzscheibe (12) wegbewegten, insbesondere weggeschwenkten Arretierposition arretierbar ist.

8. Sensoranordnung nach Anspruch 7, **dadurch gekennzeichnet, dass** ein an dem Träger oder einem trägerfesten Bauteil verschiebbar angeordneter Arretierschieber (26) in den Schwenkweg des Sensors und/oder des Hebels (15) bewegbar ist, durch den der Sensor in der Arretierposition arretierbar ist.

9. Sensoranordnung nach einem der vorhergehenden Ansprüche, **dadurch gekennzeichnet, dass** der Träger an einem Dachmodul (3) angeordnet oder Teil eines Dachmoduls (3) ist, das an einem Dachquerträger zwischen den A-Säulen oder an einem Dachhimmel des Kraftfahrzeugs befestigt ist, wobei das Dachmodul (3) eine Bedieneinheit und/oder einen Rückspiegel (28) sowie Schnittstellen zur elektrischen Verbindung mit einem Bordnetz des Kraftfahrzeugs aufweist.

10. Sensoranordnung nach Anspruch 9, **dadurch gekennzeichnet, dass** das Dachmodul (3) ein kamerabasiertes Fahrerassistenzsystem und/oder ein optisches Fahrzeuginsassen Klassifikationssystem und/oder ein Display und/oder eine Antenne aufweist.

## Claims

1. Sensor arrangement with at least one sensor which, on the passenger-compartment side, is in contact with a windscreen (12) of a motor vehicle and is arranged on a support fastened to a body part of the motor vehicle, in particular is the roof region, and is mounted on the support so as to be pivotable at least about a pivot axis which extends at least approximately parallel to the plane of the windscreen, wherein the sensor is acted upon resiliently so as to be in contact with the windscreen (12), and the first end region of a lever (15) extending in the longitudinal direction of the motor vehicle is coupled to the support at a first joint in a manner pivotable about at least one first pivot axis, and the sensor is coupled on the second end region of said lever, at a second joint, so as to be pivotable about at least one second pivot axis, wherein the first pivot axis and the second pivot axis extend at least approximately parallel to the plane of the windscreen (12) in the contact region of the sensor, and wherein the lever (15) is acted upon towards the windscreen by a spring, **characterized in that** the one end of a pretensioned tension spring (23) is arranged on the support and the second end of the tension spring (23) is arranged on the second end region of the lever (15).

2. Sensor arrangement according to Claim 1, **characterized in that** the first joint and/or the second joint are/is a pendulum joint or a ball-and-socket joint.

3. Sensor arrangement according to either of Claims 1 and 2, **characterized in that** the first joint has a first joint pin (14) extending in a manner corresponding to the first pivot axis, and/or the second joint has a second joint pin (18) extending in a manner corresponding to the second pivot axis.

4. Sensor arrangement according to one of the preceding claims, **characterized in that** the sensor is a rain sensor and/or a light sensor and/or a misting sensor and/or a solar sensor.

5. Sensor arrangement according to one of Claims 1 to 4, **characterized in that** the sensor or the sensors is or are inserted in a receptacle (11) which is coupled by means of the second joint to the lever (15) so as to be pivotable about the second pivot axis.

6. Sensor arrangement according to one of Claims 1 to 5, **characterized in that** the pivotability of the sensor about the second pivot axis is limited by one or more stops.

7. Sensor arrangement according to one of the preceding claims, **characterized in that** the sensor is lockable in a locking position moved away, in particular pivoted away counter to the action of a spring from a contact position with the windscreen (12).

8. Sensor arrangement according to Claim 7, **characterized in that** a locking slide (26) which is arranged displaceably on the support or on a component mounted on the support is moveable into the pivoting path of the sensor and/or of the lever (15), by means of which locking slide the sensor is lockable in the locking position.

9. Sensor arrangement according to one of the preceding claims, **characterized in that** the support is arranged on a roof module (3) or is part of a roof module (3) which is fastened to a roof crossmember between the A pillars or to a roof lining of the motor vehicle, wherein the roof module (3) has an operating unit and/or a rearview mirror (28) and also interfaces for the electrical connection to an electric system of the motor vehicle.

10. Sensor arrangement according to Claim 9, **characterized in that** the roof module (3) has a camera-based driver assistance system and/or an optical vehicle-occupant classification system and/or a display and/or an antenna.

## Revendications

1. Dispositif à capteurs, comprenant au moins un capteur qui est en application sur un pare-brise (12) d'un véhicule automobile du côté de l'habitacle et qui est disposé sur un support qui est fixé sur une partie de la carrosserie du véhicule, notamment dans la région du toit, et qui est monté pivotant sur le support au moins autour d'un axe de pivotement qui s'étend au moins à peu près parallèlement au plan du pare-brise, le capteur étant appliqué élastiquement au pare-brise (12) et sur le support, la première zone (12) d'extrémité d'un levier (15), s'étendant dans la direction longitudinale du véhicule automobile, est articulée sur une première articulation de manière à pouvoir pivoter autour d'au moins un premier axe d'articulation, tandis qu'à sa deuxième zone d'extrémité le capteur est articulé sur une deuxième articulation de manière à pouvoir pivoter au moins autour d'un deuxième axe de pivotement, le premier axe de pivotement et le deuxième axe de pivotement s'étendent au moins à peu près parallèlement au plan du pare-brise (12) dans la zone d'application du capteur et le levier (15) peut être appliqué élastiquement au pare-brise, **caractérisé en ce que** l'une des extrémités d'un ressort (23) de traction pré-bandé est disposé sur le support et la deuxième extrémité du ressort (23) de traction est disposée à la deuxième zone d'extrémité du levier (15).

2. Dispositif à capteurs suivant la revendication 1, **caractérisé en ce que** la première articulation et/ou la deuxième articulation est une articulation à pendule ou une rotule.

3. Dispositif à capteurs suivant les revendications 1 et 2, **caractérisé en ce que** la première articulation a un premier axe (14) s'étendant conformément au premier axe de pivotement et/ou la deuxième articulation a un deuxième axe (18) s'étendant conformément au deuxième axe de pivotement.

4. Dispositif à capteurs suivant la revendication précédente, **caractérisé en ce que** le capteur est un capteur de pluie et/ou un capteur de lumière et/ou un capteur de buée et/ou un capteur solaire.

5. Dispositif à capteurs suivant l'une des revendications de 1 à 4, **caractérisé en ce que** le ou les capteurs sont insérés dans un logement (11) qui, au moyen de la deuxième articulation, est articulé au levier (15) de manière à pouvoir pivoter autour du deuxième axe de pivotement.

6. Dispositif à capteurs suivant l'une des revendications de 1 à 5, **caractérisé en ce que** la possibilité de pivoter du capteur autour du deuxième axe de pivotement est limitée par une butée ou par plusieurs butées.

7. Dispositif à capteurs suivant l'une des revendications précédentes, **caractérisé en ce que** le capteur peut être arrêté dans une position d'arrêt éloigné, contrairement à l'effet du ressort d'une position d'application au parebrise (12), en en étant notamment éloigné par pivotement.

8. Dispositif à capteurs suivant la revendication 7, **caractérisé en ce qu'**un coulisseau (26) d'arrêt, monté coulissant sur le support ou sur un élément fixe du support, peut être déplacé dans le trajet de pivotement du capteur et/ou du levier (15), coulisseau (26) par lequel le capteur peut être arrêté dans la position d'arrêt.

9. Dispositif à capteurs suivant l'une des revendications précédentes, **caractérisé en ce que** le support est monté sur un module (3) de toit ou sur une partie d'un module (3) de toit, qui est fixé à une traverse de toit entre les montants A ou sur un habillage du plafond du véhicule automobile, le module (3) de toit ayant une unité de commande et/ou un rétroviseur (28) ainsi que des interfaces de liaison électrique avec un réseau de bord du véhicule automobile.

10. Dispositif à capteurs suivant la revendication 9, **caractérisé en ce que** le module (3) de toit a un système d'assistance du conducteur par caméra et/ou un système optique de classement des passagers et/ou un affichage et/ou une antenne.
